# EUROPEAN PATENT APPLICATION

(11) **EP 1 820 642 A1**
(43) Date of publication of application: **22.08.2007**
(21) Application number: 06425103.6
(22) Date of filing: 20.02.2006
(51) Int. Cl.: B32B 27/18, B32B 27/32, B65D 65/40

(54) **Multilayer plastic film**

(71) Applicant: Syrom 90 S.P.A., 50059 Vinci, Firence (IT)
(72) Inventor: Nassi, Aldo, 50059 Sovigliana Vinci Firenze (IT); Lepori, Alessandro, 50053 Pontorme Empoli Firenze (IT)
(74) Representative: Mannucci, Michele

(57) **Abstract**

A multilayer film for flexible packaging, comprising at least a base layer (B) based on polypropylene, having a first side and a second side; a first coating layer (A) associated with the first side of said base layer (B); a second coating layer (C) associated with the second side of said base layer (B); wherein a silicone polymer with very high viscosity utilized as lubricant agent is added to at least one of said first and second coating layers (A, C).

## Description

### Technical field

The present invention relates to a multilayer plastic film for packaging or other applications. More specifically, the invention relates to a plastic film for the packaging of food products.

Moreover, the invention relates to a method for producing a multilayer film of the aforesaid type.

### State of the art

During design of a film suitable to create flexible packaging for a food product, design difficulties are encountered due to the fact that the properties required to guarantee protection of the food are never present in a single packaging material.

This results in the need to use a combination of several materials in order to compensate for the shortages of one material with the properties of the others.

A biaxially oriented polypropylene film, for example, offers excellent protection from water vapor, but is not heat-sealable and therefore does not guarantee the seal of packages. This fact does not allow exploitation of the aforesaid barrier property with regard to water vapor.

Therefore, multiple structures are used, in which the biaxially oriented polypropylene film is made heat-sealable with the addition of one or more layers of heat-sealable material.

These layers can be added with various technologies, such as lacquering and co-extrusion.

A further difficulty is represented by the fact that these types of plastic film must also be "machinable", "machinability" being intended as their capacity to be processed in machinery for packaging products. In fact, these films are very thin, in the range of a few micrometers, and can be easily damaged or torn during use on said machinery.

Friction and mechanical resistance of the film are, moreover, important parameters in order to determine packaging speed, which has a considerably influence on the final cost of this type of product.

The need for a film of this type to be machinable makes it necessary to add specific materials or agents to the composition of the surface layers of the multilayer plastic film. Therefore, countless types of film containing various additives, such as anti-friction and lubricating agents, have been developed.

To increase the "machinability" of the plastic film the use of lubricating agents ("slip additives") is known. These can be, for example, esters of aliphatic acids, amides of aliphatic acids, waxes, organosiloxanes with viscosity of between 350 and 2500000 centistokes (cSt) (fluid silicones) - which form a coating of lubricant on the outer surface of the film, to lower the coefficient of friction and increase the slip properties of the film.

Generally, these substances are mixed with the polymer, which forms one of the layers of the multilayer film, in a quantity in weight of up to 2%.

The principal disadvantage of the use of the aforesaid anti-friction agents is represented by the fact that some operations required during processing of the plastic packaging film, such as printing and metallization, can become more problematic.

It is particularly difficult to apply metallic coating and protective layers, which provide an optimal barrier to light, oxygen and humidity and which are usually advantageously produced with very thin layers of aluminum applied with the vacuum evaporation technique to said film.

The presence of the aforesaid substances prevents correct deposition of the coating layers, in particular metal deposition, and can cause unacceptable defects in the finished product, such as whitish marks, delamination of the coating and loss of the barrier values provided by this coating.

Another disadvantage in the use of the aforesaid lubricating agents on plastic films is represented by the fact that they can reduce the optical properties of the finished product, such as luster, transparency and luminosity.

A further disadvantage is represented by the fact that it can be difficult to precisely control the degree of lubrication during processing, as distribution on the surface of the film is slow and uneven, usually creating islands or marks of lubricant on this surface.

Countless types of plastic films, also metallized, have been developed in the past, comprising different combinations and mixtures of anti-friction or lubricating agents.

The patents: US-A-5.840.419; US-A-5.840.419; US-A-6,291,063; US-B-6,902,822; US-A-4,692,379; US-A-5,137,955; US-A-4,966,933; US-A-6.623.866 describe multilayer structures of plastic films, also metallized, in which to obtain low coefficient of friction values, and consequently improve the "machinability" of the film, silicone products are also used, but with viscosity of between 350 and 2500000 cSt.

### Objects and summary of the invention

A first object of the present invention is to produce a multilayer plastic film with improved "machinability" properties.

The object of a particular embodiment of the invention is to produce a metallized multilayer plastic film with improved "machinability" properties.

A further object is the embodiment of a method to metallize a multilayer plastic film in a simple and inexpensive way.

These objects are obtained in substance with a system as claimed in claim 1 and with a method as claimed in claim 27.

The subject of the present invention is a multilayer polymer film for flexible packaging, comprising at least a base layer having a first side and a second side and composed at least in part of isotactic polypropylene; a first coating layer associated with the first side of the base layer, with an optional further protective layer being deposited on the first layer; a second coating layer associated with the second side of the base layer; wherein a silicone polymer with very high viscosity utilized as lubricant agent is added to at least one of the coating layers.

Within the scope of the present invention and of the appended claims "associated coating layer" must be understood as a layer in which further intermediate layers can be included or, optionally superimposed; in conclusion, the film can be composed of a plurality of layers superimposed on one another.

This lubricating silicone polymer can be added to the second coating layer as opposed to the first layer; alternatively, it can be added to the first layer or yet again to both coating layers.

In a particularly advantageous embodiment of the invention, the silicone polymer is of the organosiloxane type and has a high weighted mean molecular weight (preferably equal to or greater than 300000 Mw) with a viscosity of over 15000000 centistokes.

The quantity of silicone polymer utilized is preferably and advantageously between 0.5 and 2.0% in weight with respect to the first and/or to the second coating layer to which it is added.

According to a preferred embodiment of the invention, the protective layer has a thickness of approximately 100-300 Ångström (Å) and is advantageously and preferably formed by aluminum deposited with the vacuum process. However, protective layers could also be produced with lacquers or inks in place of the metallic layer or yet again with layers of lacquers or inks over this metallic layer.

According to a particularly advantageous embodiment of the invention, in the first and/or in the second coating layer to which the silicone polymer is added, it is unnecessary to utilize further additives or lubricating agents which could reduce receptivity to the optional protective layer.

However, it would also be possible to utilize minimum quantities of at least one further lubricating agent, in particular and preferably in quantities of no more than 500 parts per million (ppm) in weight with respect to the coating layer to which it is added.

In fact, it has been found that the aforesaid film has a high coefficient of friction, high receptivity to lacquer or ink type protective layers and excellent receptivity also to metal deposition, in particular to aluminum deposited using the vacuum process.

In other words, the use of silicone polymers with very high viscosity as lubricating agents does not cause any defects occurring in films containing the lubricating agents cited above and, in particular, aluminum adhesion is excellent, the barrier properties against both oxygen and water vapor provided on the structure by metallization are not altered and there are no marks on the metallized surface.

In conclusion, to produce a metallized multilayer film according to the invention it is unnecessary to utilize further lubricating agents, which can have a negative effect on adhesion of the metal or on the optical properties of the film.

Therefore, it would also be possible to utilize other types of additives to further improve the production process of the film increasing the production speed, as will be described in greater detail hereunder.

According to a further aspect, the present invention provides for a method for producing a multilayer plastic film comprising at least the following steps: extruding the film to produce the multilayer structure comprising at least a base layer, a first coating layer associated with a first side of said base layer and a second coating layer associated with a second side of said base layer; winding the film thus obtained in a roll; wherein a silicone polymer with very high viscosity is utilized as lubricating agent associated with at least one of said first and/or second coating layers.

It is also advantageous to apply a protective layer to at least one side of the film already provided with said silicone polymer.

This protective layer is advantageously and preferably a metallized layer, preferably aluminum, deposited through the vacuum metallization process. However, it would also be possible for the protective layer to be produced with lacquers or inks, optionally applied to the metallized layer.

In particular, the step to apply the silicone product with very high viscosity can advantageously be carried out by adding it to the mix which is to form at least one of the coating layers in the extruders of the machine for producing the film.

In the roll, the silicone product applied to one side of the film is transferred through contact to the opposite side with respect to the base layer. This transfer takes place in a few hours with substantially even distribution.

A particularly advantageous embodiment of the invention provides for a first step in which the polypropylene film is extruded and stretched to obtain a biaxially oriented film.

Moreover, further steps are advantageously carried out to increase the surface energy of the film, such as plasma, flame or corona treatments in order to increase the receptivity to deposition of the coating layers, in particular to metal deposition; it is clear that, in this case, deposition of the coating layer takes place on the side on which the surface treatment was performed.

In other words, the treatment to increase the surface energy is performed on the outer surface of the film devoid of silicone polymer, before winding the extruded film in a roll, and therefore before the silicone polymer applied to the other side is distributed on said outer surface.

The film thus produced can be cut and closed by sealing in order to form a package, according to substantially known methods.

The principal advantage of the present invention is represented by the fact that the quality of the finished product is considerably improved. In fact, resistance to scratching and wear of the film thus produced is increased. The appearance of the finished product is also greatly improved, as the optical properties of the finished product, such as luster and brightness, are preserved.

Moreover, in the case of metallized film, deposition of the protective layer, in particular metal deposition, is high quality and even.

Another advantage is represented by the fact that both costs and production times are considerably reduced, increasing the productivity of the production line.

Moreover, the production process of the film is easier to control, in particular it is easier to control the degree of lubrication of the film, as the silicone product is distributed more homogenously and evenly on the outer surface of the film with respect to the known lubricating agents already mentioned above.

Another advantage is represented by the fact that said film preserves the high coefficient of friction and is also slippery on the optional protective layer, in particular metallic, thereby preventing the coating from sticking to the jaws of the packaging machine during subsequent processing operations. The film thus obtained is therefore also suitable to be used optimally in lamination with other media or different layers to form plastic films with more evolved properties.

A further advantage is represented by the fact that the metallized film according to the invention can be produced with metallization machines of the conventional type.

### Brief description of the drawings

The present invention can be better understood and its numerous objects and advantages will be apparent to those skilled in the art with reference to the accompanying schematic drawings, which show a non-limiting practical embodiment of the finding.

In the drawing:
Figure 1 shows a schematic section of an exemplifying embodiment of a film according to the invention;
Figure 2 shows a schematic section of another embodiment;
Figure 3 shows a schematic section of a further embodiment.

### Detailed description of some embodiments of the invention

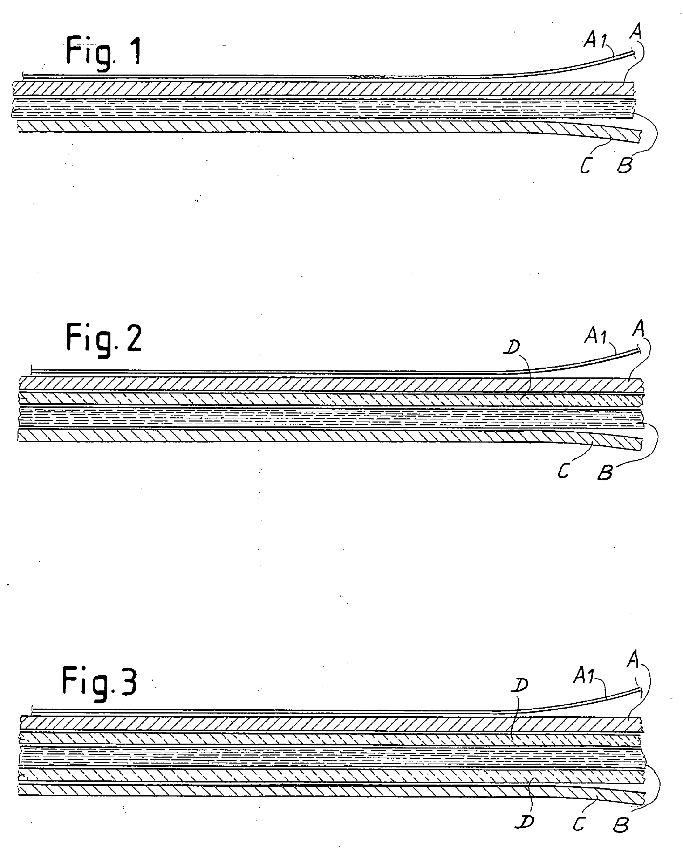

In the preferred embodiment of the present invention, the multilayer plastic film is a coextruded, biaxially oriented polypropylene based film with a base layer B and respective coating layers A and C on opposite sides of the base layer B, see Figure 1.

The base layer B is substantially composed of isotactic polypropylene obtained by coextrusion; in particular, the base layer B advantageously has a thickness of approximately 10 to 100 micrometers and can be composed of at least one of the following components or mixtures thereof:
- 100% isotactic polypropylene; or
- isotactic polypropylene mixed with isotactic polypropylene with high crystallinity; or
- isotactic polypropylene with a bimodal structure that can contain up to 1% of C₂; or
- a mixture of two isotactic polypropylenes of which one has an isotacticity index below or equal to 2%; or
- polypropylene with bimodal distribution of the molecular weights and containing up to a maximum of 1 % of ethylene.

The coating layer A is composed of a polymer, such as the copolymer C₂-C₃, the copolymer C₃-C₄ or the terpolymer C₂-C₃-C₄, or yet again can be composed of a polypropylene or of a homopolymer grafted with maleic anhydride alone or in a mixture with another homopolymer polypropylene.

In conclusion, the coating layer A has no further additives or lubricating agents which could reduce the receptivity of this layer A to deposition of the metallic or other protective layer.

The coating layer C is advantageously composed of a polymer, such as a copolymer C₃-C₄ or a terpolymer C₂-C₃-C₄, and preferably has a thickness ranging from 0.5 to 3 micrometers.

This layer C can be used to close packages and in this case it is advantageously sealable.

In a particularly advantageous embodiment of the invention, a silicone polymer of the polyorganosiloxane type with very high viscosity is included in the layer C in quantities of between 0.5 and 2.0%; it would also be possible for the layer A to include the silicone polymer alternatively or simultaneously to the layer C.

The aforesaid silicone polymer advantageously and preferably has a viscosity greater than 15,000,000 centistokes and preferably a weighted mean molecular weight equal to or greater than 300000 (Mw).

The silicone polymer can be added directly to at least one outer surface of the film or can be included in one of the layers A and/or C to be distributed on the respective outer side.

The film according to the invention has a dynamic Coefficient of Friction (COF) with values below 0.35; structures without lubricating silicone polymers in general have a dynamic Coefficient of Friction of over 0.6.

According to a particularly advantageous embodiment of the invention, the silicone polymer contained in the side C is distributed on the layer A, this distribution advantageously taking place through contact during winding of the film into a roll in the production phase.

The layer A preferably has a thickness of approximately 0.5 to 2 micrometers, or even more preferably between approximately 0.6-0.8 micrometers, and can advantageously be metallized using a known vacuum metallization technique, without pre-treatment with plasma in-line with the metallization process.

In this way it is possible to produce optional protective layers A', in particular although not only metallization layers, with thickness having an optical density (OD) ranging from 1 to 3.

Nonetheless, the layer A can advantageously be treated with a corona, flame or plasma treatment to facilitate subsequent deposition of the protective layer A'.

It would also be possible for an antiblocking agent of, for example, the inorganic type, such as amorphous silica, calcium carbonate, magnesium silicate, aluminum silicate, or of the organic type, such as cross-linked polymethacrylate (i.e. EPOSTAR MA - Nippon Shokubai, Japan) or cross-linked polysiloxane (i.e. TOSPEARL - Toshiba Silicon Co., Japan) to be added to at least one of the coating layers A and/or C.

Moreover, products that further improve adhesion of the metal, in particular aluminum, or which improve the barrier performances, such as polyolefin copolymers grafted with maleic anhydride, terpene resins, hydrocarbon resins can be added to the layer A.

Other embodiments of the invention advantageously provide that at least one of the coating layers A or C can include further and different layers.

In particular, Figure 2 shows a joining layer D advantageously included between the coating layer A and the first side of the base layer B, so as to form a structure of the film of the type A-D-B-C. In this case the layer D is preferably composed of a polyolefin polymer grafted with maleic anhydride; the layer A can be composed of a copolymer of the ethylene vinyl alcohol (EVOH) type; the layers B and C can be composed according to the description above.

Very high viscosity silicon polymer is added to the layer C and the layer A can be metallized, all as described above.

Figure 3 shows a further embodiment of the invention in which intermediate or joining layers D are associated with both of the coating layers A and C and are in contact with the respective faces of the base layer B, so as to form a structure of the type A-D-B-D-C.

In any case cavitating agents, such as PBT, CaCO₃, EVOH or the like can be used, added to the base layer B and/or to the joining layer D. Moreover, the use of a cavitating agent with a density below 0.9 g/cm³ can be used, in order to give the finished product a matt white appearance.

The layer A and/or C can be treated before deposition of the silicone polymer with a corona treatment with total absence of 0₂, but in the presence of mixtures of gas based on N₂ and CO₂, or with a mixed corona-flame system.

### Measurement methods utilized to determine the properties of the multilayer films

Oxygen Transmission Rates (OTR): ASTM D 3985 (23°C; 0% r.h.)
Water Vapor Transmission Rates (WVTR): ASTM D 1249 (38°C; 90% r.h.)
Optical Density (O.D.): Macbeth instrument TD 931
Metal/Film Adhesion (Tape Test): AIMCAL TP 104-87
Seal resistance: 130°C; 103421 Pa; 1 s (Polikrimper/TX-Alipack heat-sealing machine)
Coefficient of Friction (COF): ASTM D 1894

### Example no.1

Two samples of film of the type A-B-C are prepared by coextrusion and bi-axial orientation in which:
- the coating layer A is composed for both samples of a copolymer C₃-C₄ (Clyrell RC1601 - Basell) with a thickness of approximately 0.6 microns and is subjected to flame treatment.
- the base layer B for both samples is of the polypropylene homopolymer type (Moplen HP522H - Basell) with a thickness of approximately 16 micrometers.
- the coating layer C is heat sealable and has a thickness of approximately 1 micrometer composed for one sample (film 1) of a terpolymer C₂-C₃-C₄ (Adsyl 5C39F Basell) and for the second sample (film 2) of a mixture composed for 98% of a terpolymer C₂-C₃-C₄ (Adsyl 5C39F Basell) and 2% of a masterbatch in turn composed of homopolymer PP 50% and silicone polymer with high molecular weight 50% (MB50-001 - Dow Corning).

The following results are observed on the films:

| | Film 1 | Film 2 |
|---|---|---|
| Seal resistance C/C | 1.5 - 2.5 N/cm | 1.5 - 2.5 N/cm |
| Dynamic COF A/A | 0.60 - 0.80 | 0.25 - 0.30 |
| Dynamic COF C/C | 0.60 - 0.70 | 0.20 - 0.30 |

### Example no.2

The films in example 1 (film 1 and film 2) are metallized applying a layer of aluminum coating (A') to the layer A.

The following results are observed after metallization:

| | Metallized Film 1 | Metallized Film 2 |
|---|---|---|
| Optical Density | 2.4 | 2.4 |
| Presence of marks | NO | NO |
| Aluminum/film adhesion | Excellent | Excellent |
| OTR | 15 - 20 cm³/m²/24h | 15 - 20 cm³/m²/24h |
| WVTR | 0.20 - 0.35 g/m²/24h | 0.20 - 0.35 g/m²/24h |
| Seal resistance C/C | 1.5 - 2.5 N/cm | 1.5 - 2.5 N/cm |
| Dynamic COF C/C | 0.60 - 0.70 | 0.20 - 0.30 |

### Example no.3:

The films in example 1 (film 1 and film 2) are treated with plasma on the layer A and then metallized applying an aluminum coating layer (A') to the layer A.

The following results are observed after metallization:

| | Metallized Film 1 | Metallized Film 2 |
|---|---|---|
| Optical density | 2.4 | 2.4 |
| Presence of marks | NO | NO |
| Aluminum/Film adhesion | Excellent | Excellent |
| OTR | 5 - 7 cm³/m²/24h | 5 - 7 cm³/m²/24h |
| WVTR | 0.06 - 0.08 g/m²/24h | 0.06 - 0.08 g/m²/24h |
| Seal resistance C/C | 1.5 - 2.5 N/cm | 1.5 - 2.5 N/cm |
| Dynamic COF C/C | 0.60 - 0.70 | 0.20 - 0.30 |

## Claims

1. A multilayer film for flexible packaging, comprising at least:
- a base layer (B) based on polypropylene having a first side and a second side;
- a first coating layer (A) associated with the first side of said base layer (B);
- a second coating layer (C) associated with the second side of said base layer (B);
wherein a silicone polymer with very high viscosity utilized as lubricant agent is added to at least one of said first and second coating layer (A. C).

2. Multilayer film as claimed in claim 1, **characterized in that** said silicone polymer has a viscosity greater than 1500000 (cSt).

3. Multilayer film as claimed in claim 1 and/or 2, **characterized in that** said silicone polymer has a weighted mean molecular weight greater than 300000 (Mw).

4. Multilayer film as claimed in one or more of the previous claims, **characterized in that** said silicone polymer is the only lubricating agent or is combined with one or more further lubricating agents, in quantities of no more than 500 ppm.

5. Multilayer film as claimed in one or more of the previous claims, **characterized in that** said silicone polymer is in a quantity of between 0.5 and 2.0% in weight with respect to the weight of said first or second coating layer (A; C) to which it is added.

6. Multilayer film as claimed in one or more of the previous claims, **characterized in that** it comprises a further protective layer (A') on said coating layer (A).

7. Multilayer film as claimed in at least claim 6, **characterized in that** said protective layer (A') is chosen from the group comprising: a metallization layer, a layer of lacquer, a layer of ink or combinations thereof, preferably an aluminum based vacuum metallization layer.

8. Multilayer film as claimed in one or more of the previous claims, **characterized in that** said protective layer (A') has a thickness between 100-300 (A).

9. Multilayer film as claimed in one or more of the previous claims, **characterized in that** said protective layer (A') has an optical density (OD) between 1 and 3.

10. Multilayer film as claimed in one or more of the previous claims, **characterized in that** the level of the dynamic coefficient of friction (COF) is less than or equal to 0.35.

11. Multilayer film as claimed in one or more of the previous claims, **characterized in that** said coating layer (A) has a thickness between 0.5 and 2 micrometers, preferably between 0.6 and 0.8 microns.

12. Multilayer film as claimed in one or more of the previous claims, **characterized in that** said second coating layer (C) has a thickness between 0.5 and 3 micrometers.

13. Multilayer film as claimed in one or more of the previous claims, **characterized in that** said base layer (B) of said film has a thickness between 10 and 100 micrometers.

14. Multilayer film as claimed in one or more of the previous claims, **characterized in that** said first and/or said second coating layer (A; C) is composed of at least one of the following polymers: a copolymer C₂-C₃, a copolymer C₃-C₄, a terpolymer C₂-C₃-C₄, an ethylene vinyl alcohol copolymer or combinations thereof.

15. Multilayer film as claimed in one or more of the previous claims, **characterized in that** an antiblocking agent, such as amorphous silica, calcium carbonate, magnesium silicate, aluminum silicate, or cross-linked polymethacrylate or cross-linked polysiloxane is added to at least one of said coating layers (A; C)

16. Multilayer film as claimed in one or more of the previous claims, **characterized in that** further products which improve adhesion of said protective layer (A') or which improve the barrier performances thereof, such as polyolefin copolymers grafted with maleic anhydride, terpene resins, hydrocarbon resins, are added to said first and/or second coating layer (A; C), to which said silicone polymer is added.

17. Multilayer film as claimed in one or more of the previous claims, **characterized in that** said base layer (B) is composed of 100% isotactic polypropylene, isotactic polypropylene mixed with isotactic polypropylene with high crystallinity, isotactic polypropylene with a bimodal structure that can contain up to 1% of C₂, a mixture of two isotactic polypropylenes of which one has an isotacticity index below or equal to 2%, or a polypropylene with bimodal distribution of the molecular weights and containing up to a maximum of 1% of ethylene.

18. Multilayer film as claimed in one or more of the previous claims, **characterized in that** it is composed of a structure A-B-C.

19. Multilayer film as claimed in one or more of claims 1 to 24, **characterized in that** it is composed of a structure A-D-B-C, with an intermediate joining layer (D) between said first coating layer (A) and said base layer (B).

20. Multilayer film as claimed in one or more of claims 1 to 19, **characterized in that** it is composed of a structure A-D-B-D-C, with a joining layer between the base layer and said first coating layer (A) and a joining layer (D) between said base layer (B) and said second coating layer (C).

21. Multilayer film as claimed in claim 19 or 20, **characterized in that** said joining layer (D) is composed of a polyolefin copolymer grafted with maleic anhydride.

22. Multilayer film as claimed in one or more of the previous claims, **characterized in that** cavitating agents such as PBT, CaCO₃, EVOH and the like, are added to said base layer (B)

23. Multilayer film as claimed in at least one of claims 19 to 22, **characterized in that** said cavitating agents are added to said joining layer (D).

24. Multilayer film as claimed in one or more of the previous claims, **characterized in that** said first and/or second coating layer (A; C), to which said coating layer (A') will be applied, has been treated with a corona treatment, preferably in the total absence of O₂, and preferably in the presence of mixtures of gas based on N₂ and CO₂ before deposition of said protective layer (A').

25. Multilayer film as claimed in one or more of the previous claims, **characterized in that** said first and/or second coating layer (A; C), to which said coating layer (A') is applied, has been treated with a mixed corona-flame system before deposition of said protective layer (A').

26. Multilayer film as claimed in one or more of the previous claims, **characterized in that** said second coating layer (C) is sealable.

27. A method for producing a metallized multilayer plastic film comprising the following steps:
- extruding the film to produce the multilayer structure comprising at least a base layer (B), a first coating layer (A) associated with a first side of said base layer (B) and a second coating layer (C) associated with a second side of said base layer (B);
- winding the film thus obtained in a roll;
**characterized in that** a silicone polymer with very high viscosity is utilized as lubricating agent associated with at least one of said first and/or second coating layers (A; C).

28. Method as claimed in claim 27, **characterized in that** said silicone polymer has a viscosity greater than 1500000 centistokes (cSt).

29. Method as claimed in claim 27 and/or 28, **characterized in that** said silicone polymer has a weighted mean molecular weight greater than 300000 (Mw).

30. Method as claimed in one or more of claims 27 to 29, **characterized in that** said silicone polymer is used as the only lubricating agent or in combination with one or more further lubricating agents, in quantities of no more than 500 ppm.

31. Method as claimed in one or more of claims 27 to 30, **characterized in that** said silicone polymer is in a quantity of between 0.5 and 2.0% in weight with respect to the weight of said first and/or second coating layer (A; C) to which it is added.

32. Method as claimed in one or more of claims 27 to 31, **characterized in that** a protective layer (A') is applied to at least one side of the film already provided with said silicone polymer, said protective layer (A') being chosen from the group comprising: a metallization layer, a layer of lacquer, a layer of ink or combinations thereof, preferably a layer of aluminum deposited through the vacuum procedure.

33. Method as claimed in one or more of claims 27 to 32, **characterized in that** said silicon polymer is added to the mixture of at least one of said first and/or second coating layer (A; C) associated with the base layer (B).

34. Method as claimed in one or more of claims 27 to 32,
**characterized in that** said silicone polymer is applied to a layer positioned on a first side of the base layer (B) and is transferred through contact to the corresponding outer side of the film on the other side of the base layer (B) when the film is wound in a roll.

35. Method as claimed in one or more of claims 27 to 34, **characterized in that** it comprises a surface activation step of at least one of the outer sides of the film, to increase the surface energy of said side, before transfer of said silicone polymer to said side, for example a plasma, flame or corona treatment.

36. Method as claimed in one or more of claims 27 to 35, **characterized in that** it comprises a subsequent step to seal at least one of said layers (A; C; D) at the end of said film in order to form a closed package.

37. Film as claimed in one or more of the previous claims, **characterized in that** it is a coextruded biaxially oriented film.
